# EUROPEAN PATENT SPECIFICATION

(11) **EP 2 858 506 B1**
(45) Date of publication and mention of the grant of the patent: **22.07.2020**
(21) Application number: 13801233.1
(22) Date of filing: 31.05.2013
(51) Int. Cl.: A01N 43/90, A01N 43/88, A01N 47/36, A01N 25/04, A01P 13/00

(54) **HIGH STRENGTH HERBICIDAL SUSPENSION CONCENTRATES**
HOCHFESTE HERBIZIDE SUSPENSIONSKONZENTRATE
CONCENTRÉS DE SUSPENSION HERBICIDE À HAUTE RÉSISTANCE

(30) Priority: 06.06.2012 US 201261656148 P
(43) Date of publication of application: 15.04.2015
(73) Proprietor: Dow AgroSciences LLC, Indianapolis, IN 46268 (US)
(72) Inventor: AULISA, Lorenzo, Carmel, IN 46033 (US)
(74) Representative: f & e patent
(86) International application number: PCT/US2013/043697
(87) International publication number: WO 2013/184516

(56) References cited:
- EP-A1- 0 354 346
- EP-A1- 1 023 832
- EP-A1- 1 741 339
- EP-A2- 0 343 142
- EP-A2- 1 095 564
- WO-A2-2011/113061
- CN-A- 101 647 450
- GB-A- 2 149 665
- US-A- 3 948 636
- US-A- 6 074 986
- US-A1- 2002 055 435
- US-A1- 2006 264 330
- US-A1- 2007 149 404
- US-A1- 2009 062 127
- US-A1- 2011 082 039
- US-A1- 2011 124 590
- US-A1- 2011 201 500
- US-A1- 2012 015 811
- US-A1- 2012 053 055
- US-A1- 2012 053 055

## Description

This application claims priority to U.S. Provisional Patent Application No. US 61/656,148, filed June 6, 2012.

### I. BACKGROUND

High-strength, *e.g*., high concentration formulations are desirable for a variety of economic and environmental reasons, including the reduction of shipping and handling costs. Liquid pre-mix concentrates containing two or more active ingredients are useful in a wide variety of agricultural applications. For example, two or more pesticidal active ingredients may be combined in order to control a wider spectrum of pests, or to utilize multiple modes of action, compared to the individual active ingredients alone. A synergistic mixture of penoxsulam and bentazon is described in US 2012/0553055 A1.

The preparation of liquid pre-mix concentrates that are chemically and/or physically stable remains a challenge. Examples of physical instability include, for example, phase separation, crystallization, settling, sedimentation, gelling, and agglomeration. The preparation of formulations that combine a water-soluble ingredient with a water-insoluble ingredient, *e.g*., solids is also a challenge. Use of rheology modifying additives for thickening aqueous suspension concentrates containing a high aqueous phase salt content can be challenging, and results are unpredictable. Such aqueous suspension concentrates where the salt is a water soluble salt of a herbicide active ingredient can be physically unstable when traditional rheology modifying additives are used. These thickeners may be incompatible with the high ionic strength aqueous phase leading to phase separation and precipitation of solids rendering the composition to be of no utility.

Thus, there is a need for stable aqueous pre-mix concentrates containing a dispersed phase of an insoluble pesticide active ingredient and a high ionic strength aqueous phase containing a water soluble salt of an herbicide, and methods of making the same.

### I. SUMMARY

Provided herein are stable compositions comprising:
a) a dispersed phase comprising, with respect to the total composition, from 1 gram active ingredient per liter (g ai/L) to 200 g ai/L of a water insoluble solid pesticide which is penoxsulam;
b) a continuous aqueous phase comprising, with respect to the total composition, from 100 g ai/L to 500 g ai/L of a water soluble salt of bentazon and from 200 g/L to 800 g/L of water;
c) from 0.1 g/L to 20 g/L of at least one compatible rheology agent; and
d) from 1 g/L to 100 g/L, with respect to the total composition, of at least one wetting-dispersing agent;
wherein at least one rheology agent is a mixture comprising microfibrous cellulose, a xanthan gum, and carboxymethylcellulose.

### II. DETAILED DESCRIPTION

Provided herein are stable compositions comprising:
a) a dispersed phase comprising, with respect to the total composition, from 1 gram active ingredient per liter (g ai/L) to 200 g ai/L of a water insoluble solid pesticide which is penoxsulam;
b) a continuous aqueous phase comprising, with respect to the total composition, from 100 g ai/L to 500 g ai/L of a water soluble salt of bentazon and from 200 g/L to 800 g/L of water;
c) from 0.1 g/L to 20 g/L of at least one compatible rheology agent; and
d) from 1 g/L to 100 g/L, with respect to the total composition, of at least one wetting-dispersing agent,
wherein at least one rheology agent is a mixture comprising microfibrous cellulose, a xanthan gum, and carboxymethylcellulose.

In certain embodiments, the compositions optionally include additional active ingredients and/or inert formulation ingredients.

Also provided herein are methods for producing the compositions.

As used herein, the term "stable composition" refers to compositions that are stable physically and/or chemically for defined periods of time to the environments in which they are produced, transported and/or stored. Aspects of "stable compositions" include, but are not limited to: physical stability at temperatures that range from about 0 °C to about 50 °C, homogeneity, pourability, liquids that do not exhibit appreciable sedimentation or Ostwald ripening of the dispersed particles, compositions that form little or no precipitated solids or exhibit phase separation, compositions that readily disperse when poured into a spray tank of water and retain their biological efficacy when applied, for example, by spray application to target pests. In some embodiments, the compositions form stable, homogeneous suspension concentrates that do not exhibit syneresis and/or exhibit very little change in viscosity under the storage conditions.

In some embodiments, the described compositions are stable at temperatures of greater than or equal to about 40 °C for a period of at least 4, 6 or 8 weeks. In some embodiments, the described compositions are stable at temperatures greater than or equal to about 54 °C for a period of at least about 2 weeks. In some embodiments, the compositions do not exhibit or do not significantly exhibit separation or precipitation (or crystallization) of any of the components at low temperatures.

In some embodiments, the compositions remain as homogeneous suspension concentrates for at least about 2 weeks at temperatures below about 20 °C, below about 10 °C, or equal to or less than about 5 °C, or about 0 °C. In certain embodiments, the compositions are stable at these temperatures for at least about 4, 6, or 8 weeks.

In some embodiments, the compositions remain as homogeneous suspension concentrates after subjecting them to freeze/thaw (F/T) conditions for at least about 2 weeks where the temperature is cycled from about -10 °C to about 40 °C every 24 hours.

### A. Water Insoluble Solid Pesticide

Suspended or dispersed in the aqueous phase of the compositions described herein is the water-insoluble solid pesticide penoxsulam.

In certain embodiments, the described compositions optionally include an herbicide safener as a component of the dispersed phase of the described compositions.

The water insoluble pesticide is dispersed and may be formulated such that it is not coated or surrounded by an organic solvent.

Exemplary herbicide safeners useful as active ingredients in the dispersed phase of the described compositions include, but are not limited to, one or more herbicide safeners, such as benoxacor, benthiocarb, brassinolide, cloquintocet, daimuron, dicyclonon, fenchlorazole-ethyl, fenclorim, harpin proteins, isoxadifen-ethyl, jiecaowan, jiecaoxi, mephenate, oxabetrinil, R29148, *N*-phenyl-sulfonylbenzoic acid amides, and derivatives thereof.. In some embodiments, the safener is cloquintocet or an ester or salt thereof, such as, for example, the mexyl ester or the sodium salt. In certain embodiments, cloquintocet is utilized to antagonize harmful effects of the compositions on rice and cereals.

In some embodiments, the average particle size for the water-insoluble pesticide active ingredient is about 1-10 micrometers (µm). In certain embodiments, the penoxsulam is technical grade powder having an average particle size of about 3-6 µm.

The loading of the water-insoluble active ingredient in the composition as a whole depends on the active ingredient in question and the intended use of the composition. In some embodiments, the loading is from about 1 to about 100 g ai/L.

### B. Water Soluble Salt of a Pesticide

The term "water-soluble" in relation to a pesticide or plant growth regulator or a salt thereof as used herein means having solubility in deionized water at 20 °C sufficient to enable the water-soluble active ingredient to be dissolved completely in the aqueous phase of a composition at the desired concentration. In some embodiments, the water-soluble active ingredients useful in the compositions described herein have solubility in deionized water at 20 °C of not less than about 50 g/L or not less than about 200 g/L. The pesticide is a water soluble salt of bentazon.

The water-soluble salt of bentazon contained in the continuous aqueous phase of the described compositions include, *e.g*., salts of one or more cations selected from sodium, potassium, ammonium and organo ammonium, wherein the organo ammonium cations may have from 1 to about 16 carbon atoms. Exemplary organo ammonium cations include, for example, dimethyl ammonium, monoethanol ammonium, n-propyl ammonium, and isopropyl ammonium. In certain embodiments, the water-soluble salt of bentazon is bentazon-sodium.

The aqueous phase of the described compositions is described as being of high ionic strength due to the presence of a considerable amount of a dissolved salt, such as bentazon-sodium, in the aqueous phase. The water-soluble herbicide active ingredient of the compositions described herein, *e.g.,* the herbicide bentazon-sodium, is present at a concentration in the composition as a whole sufficient, upon dilution of the composition in a suitable volume of water and applied by spraying to the target locus, to be herbicidally effective. In some embodiments, a loading of about 100 to about 500 g ai/L of bentazon-sodium is employed. In certain embodiments, compositions comprise greater than 500 g ai/L of bentazon-sodium. In certain embodiments, the composition comprises about 250 to about 450 g ai/L of bentazon sodium. In certain embodiments, the composition comprises about 300 to about 400 g ai/L of bentazon sodium.

In some embodiments, the water insoluble pesticide is penxosulam, and the weight ratio of bentazon-sodium to penoxsulam is from about 100:1 to about 10:1. In another embodiment, the weight ratio of bentazon-sodium to penoxsulam is from about 70:1 to about 20:1. In another embodiment, the weight ratio of bentazon-sodium to penoxsulam is from about 40:1 to about 20:1. In yet another embodiment, the weight ratio of bentazon-sodium to penoxsulam is from about 30:1 to about 20:1.

### C. Rheology Agents

The compositions described herein comprise from about 0.1 g/L to about 20 g/L of at least one compatible rheology agent. Use of rheology modifying additives for thickening aqueous suspension concentrates containing an aqueous phase with a high concentration of dissolved solids or salts for the purpose of preventing the sedimentation of the dispersed solid particles can be challenging. In particular, such aqueous suspension concentrates where the dissolved solid is a water soluble salt of a herbicide active ingredient can be physically incompatible with typical rheology modifying agents when used alone or in combination to thicken and stabilize the composition. In such instances these thickeners, when added to the aqueous suspension concentrate, lead to phase separation and precipitation of solids rendering the composition to be of no utility.

Compatible aqueous pesticide mixtures or solutions are defined as those mixtures or solutions that, when formed by the combination or mixing of one or more pesticide products and/or other commonly used ingredients, result in a homogeneous liquid with little or no solids precipitation or phase separation and the retention of their biological efficacy.

It has now unexpectedly been found that certain rheology agents are compatible with and can be used to thicken and thereby stabilize aqueous suspension concentrates having a high concentration of water soluble salts of the herbicide active ingredient and suspended solid pesticide particles. These rheology agents offer improved performance in more demanding aqueous environments than typical xanthan gum, smectite clay or microcrystalline cellulose thickening agents. The improved performance of these rheology agents may be a result of one or more of the following improved performance attributes when they are compared to typical thickening agents: (1) higher thickening activity per unit weight, (2) better temperature, salt and pH stability, (3) enhanced hydration rates, particularly in high ionic strength and high dissolved solids containing solutions, and (4) enhanced particle suspension performance. In particular, when one or more of these rheology agents are used individually, together and/or in combination with conventional xanthan gum, smectite clay or microcrystalline cellulose rheology modifiers such as, for example, Veegum® HS or Veegum® K (Veegum® products are available from R.T. Vanderbilt (Norwalk, CT)), stable aqueous suspension compositions containing water soluble salts of bentazon are formed.

In some embodiments the rheology agent is Cellulon® PX (2009, CP Kelko (Atlanta, GA)) which is a blend containing a microfibrous cellulose, a xanthan gum and a carboxymethyl cellulose.

Without being bound by any theory, the described method of increasing viscosity in the compositions described herein exploits the tendency of small particles or hydrocolloids, when dispersed in an aqueous suspension, to form linear chains in the absence of agitation, and the tendency of such chains to form three-dimensional network-like structures throughout the composition. These tendencies increase as the particles become smaller. The resulting structural viscosity inhibits settling of dispersed particles, but is easily broken down when gently agitated to allow the material to be readily poured from the container.

### D. Wetting-Dispersing Agents

The compositions described herein comprise from about 1 g/L to about 100 g/L of at least one wetting-dispersing agent. Wetting-dispersing agents facilitate the dispersion of the water-insoluble solid pesticide particles in the aqueous medium and prevent aggregation of the particles themselves. Suitable wetting-dispersing agents include, but are not limited to, alkylarylsulfonate salts, such as calcium dodecylbenzenesulfonate; alkylphenol-alkylene oxide addition products, such as nonylphenol-Cis ethoxylate; soaps, such as sodium stearate; alkylnaphthalene-sulfonate salts and condensates, such as sodium dibutylnaphthalenesulfonate; dialkyl esters of sulfosuccinate salts, such as sodium di(2-ethylhexyl) sulfosuccinate; quaternary amines, such as lauryl trimethylammonium chloride; alkyl amines, such as tallow amine or derivatives thereof; block copolymers of ethylene oxide and propylene oxide; acrylic copolymers grafted with polyethylene oxide side chains; amphoteric polymers; and salts of mono and dialkyl phosphate esters.

In some embodiments, the wetting-dispersing agent is a combination of Morwet® D-425 (sodium salt of an alkylnaphthalene-sulfonate condensate) and Pluronic® P-105 (block copolymer of ethylene oxide and propylene oxide). In certain embodiments, the wetting-dispersing agent is Atlox® 4913 (comb-type polymeric surfactant; acrylic-methacrylic copolymer grafted with polyethylene oxide side chains) or Atlox® 4915 (an amphoteric polymeric surfactant).

[Morwet® D-425 is available from Akzo Nobel (Chicago, IL); Pluronic® P-105 is available from BASF Corporation (Florham Park, NJ); Atlox® 4913 and 4915 are available from Croda (Edison, NJ)]

### E. Optional Additional Herbicides

The compositions disclosed herein may optionally be used in conjunction with additional herbicide active ingredients if they cause no incompatibility or active ingredient stability issues. These herbicide active ingredients include, but are not limited to, alkali metal salts, amine salts or esters of benzoic acids, phenoxyalkanoic acids, pyridinecarboxylic acids, pyrimidinecarboxylic acids and pyridinyloxycarboxylic acids such as, dicamba, 2,4-D, MCPA, 2,4-DB, aminopyralid, aminocyclopyrachlor, picloram, clopyralid, fluroxypyr and triclopyr, and alkali metal salts of bromoxynil and ioxynil. In some embodiments, the amines are primary, secondary or tertiary alkylamines, alkanolamines, alkylalkanolamines or alkoxyalkanolamines wherein the alkyl and alkanol groups are saturated and contain C₁-C₄ alkyl groups individually. Exemplary alkali metals are sodium and potassium. The compositions disclosed herein may also optionally be used in conjunction with bispyribac-sodium, carfentrazone-ethyl, cyhalofop-butyl, diclofop-methyl, fluazifop-P-butyl, haloxyfop-P-methyl, imazapic, imazapyr, imazamethabenz, imazamox, imazethapyr, pendimethalin, profoxydim, sethoxydim, tebuthiuron and trifloxysulfuron.

The compositions and methods described herein, can, further, be used in conjunction with glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, and bromoxynil on glyphosate-tolerant, glufosinate-tolerant, dicamba-tolerant, phenoxy auxin-tolerant, pyridyloxy auxin-tolerant, aryloxyphenoxypropionate-tolerant, ACCase-tolerant, imidazolinone-tolerant, ALS-tolerant, HPPD-tolerant, PPO-tolerant, triazine-tolerant, bromoxynil-tolerant, and crops possessing multiple or stacked traits conferring tolerance to multiple chemistries and/or multiple modes of action.

When the described compositions are used in combination with the additional active ingredients such as, for example, herbicide active ingredients, the presently claimed compositions can be formulated with the other active ingredient or active ingredients as premix concentrates, tank-mixed in water with the other active ingredient or active ingredients for spray application or applied sequentially with the other active ingredient or active ingredients in separate spray applications.

### F. Optional Inert Ingredients

The compositions disclosed herein may optionally contain inert formulation ingredients such as, but not limited to, dispersants, surfactants and wetting agents. These optional inert ingredients may include surfactants conventionally used in the art of formulation that are described, *inter alia,* in "McCutcheon's Detergents and Emulsifiers Annual," MC Publishing Corp., Ridgewood, New Jersey, 1998 and in the "Encyclopedia of Surfactants," Vol. I-III, Chemical Publishing Co., New York, 1980-81. These surface-active agents can be anionic, cationic or nonionic in character and can be employed as emulsifying agents, wetting agents, suspending agents, or for other purposes.

In addition to the specific methods and compositions set forth above, the methods and compositions described herein also may include compositions containing one or more additional compatible ingredients. These additional ingredients may include, for example, one or more pesticides or other ingredients, which may be dissolved or dispersed in the composition and may be selected from acaricides, algicides, antifeedants, avicides, bactericides, bird repellents, chemosterilants, defoliants, desiccants, disinfectants, fungicides, herbicide safeners, herbicides, insect attractants, insecticides, insect repellents, mammal repellents, mating disrupters, molluscicides, nematicides, plant activators, plant growth regulators, rodenticides, semiochemicals, synergists, and virucides. Also, any other additional ingredients providing functional utility such as, for example, antifoam agents, antimicrobial agents, buffers, corrosion inhibitors, dispersing agents, dyes, fragrants, freezing point depressants, neutralizing agents, odorants, penetration aids, sequestering agents, spray drift control agents, spreading agents, stabilizers, sticking agents, viscosity-modifying additives, and the like, may be included in these compositions.

### G. Methods of Preparation and Use

In some embodiments, the compositions described herein are prepared by the steps of
(1) preparing a first aqueous phase by mixing water with the one or more rheology agents and any water compatible ingredients including, but not limited to, water insoluble active ingredients and optionally, other inert ingredients such as pH buffers, wetting agents, antifreeze agents, antifoam agents, biocides, etc; and
(2) dissolving the water soluble active ingredient in water to form a 2^{nd} aqueous phase, optionally containing any additional inert ingredients; and
(3) slowly adding the 2^{nd} aqueous phase into the first aqueous phase with good mixing until the described suspension concentrate is achieved.

Exemplary water compatible ingredients may include, but are not limited to, water soluble or water insoluble dispersing surfactants, water insoluble active ingredients and optionally, other inert ingredients such as pH buffers, wetting agents, antifreeze agents, antifoam agents, biocides, etc.

The aqueous herbicidal compositions described herein may optionally be diluted in an aqueous spray mixture for agricultural application such as for weed control in crop fields. Such compositions are typically diluted with an inert carrier, such as water, before application. The diluted compositions, which are usually applied, for example, to weeds, the locus of weeds or the locus of where weeds may eventually emerge, in some embodiments contain about 0.0001 to about 1 weight percent active ingredient or from 0.001 to about 0.05 weight percent active ingredient. The present compositions can be applied, for example, to weeds or their locus by the use of conventional ground or aerial sprayers, by addition to irrigation water and by other conventional means known to those skilled in the art.

### H. Examples

The following Examples are presented to illustrate various aspects of the compositions described herein and should not be construed as limitations to the claims.

### Example 1. Preparation of a Stable Aqueous Suspension Concentrate Containing 32 Wt% Sodium Bentazon and 0.89 Wt% Penoxsulam (Sample 1; not covered by the attached claims)

A stock solution of Veegum® HS and Kelzan® Advanced Performance (AP) were mixed together in water. After the rheology agents were properly mixed and hydrated, propylene glycol was then added to the solution. The solution thus formed was mixed at moderate stirring speed with a suspension of penoxsulam in water containing Proxel™ GXL, citric acid, Pluronic® P-105 and Morwet® D-425 that was slowly added. The resulting suspension (with mixing at 600 rpm) was then treated with Atlox® 4913, a 44 wt% solution of bentazon-sodium in water (very slow addition) and finally Antifoam B to provide the described aqueous suspension concentrate. The composition contained the following: bentazon sodium active ingredient (361.12 g/L, 31.99 wt%), penoxsulam active ingredient (10.044 g/L, 0.89 wt%), Antifoam B (1.146 g/L, 0.10 wt%), propylene glycol antifreeze (41.835 g/L, 3.71 wt%), Proxel™ GXL biocide, (0.047 g/L, 0.004 wt%), available from Arch Chemicals, Inc. (Smyrna, GA), Pluronic® P-105 dispersant, available from BASF Corporation (Florham Park, NJ), (1.408 g/L, 0.12 wt%), citric acid pH buffer (0.047 g/L, 0.004 wt%), Atlox® 4913 dispersing agent, available from Croda (Edison, NJ), (10.044 g/L, 0.89 wt%), Morwet® D-425 dispersing agent, available from Akzo Nobel (Chicago, IL), (1.408 g/L, 0.12 wt%), Veegum® HS rheology agent, available from RT Vanderbilt (Norwalk, CT), (2.257 g/L, 0.20 wt%), Kelzan® AP rheology agent, available from CP Kelco (Atlanta, GA) (2.257 g/L, 0.20 wt%), water (balance). Inventive Samples 2 and Comparative 3 and 4 were prepared in a similar manner to Sample 1, except using the rheology agent or rheology agents and the amounts shown in Table 1.

### Example 2. Storage Stability Determination of Aqueous Suspension Concentrates Containing Sodium Bentazon and Penoxsulam

The aqueous suspension concentrates prepared were stored at room temperature for 2 weeks, 54 °C for 2 weeks and/or freeze/thaw conditions for 2 weeks. The samples were then evaluated for homogeneity, change in viscosity and syneresis-sedimentation. Samples rated as stable were homogeneous, had little or no change in viscosity and showed little or no syneresis or sedimentation when compared to the samples stored at rt.

**Table 1. Storage Stability of Aqueous Pre-mix Concentrates Containing Sodium Bentazon and Penoxsulam**

| **Sample Number** | **Rheology Agent (wt%)¹** | **Storage Conditions** | | |
|---|---|---|---|---|
| | | RT, 2 Weeks | 54 °C 2 Weeks | FT², 2 Weeks |
| 2 | Cellulon® PX (0.2%) | stable | stable | stable |
| 3 | Kelzan® ASX (0.23%)/ Avicel® CL-611(1.0%) | incompatible³ | - | - |
| 4 | Kelzan® S (0.5%) | incompatible³ | - | - |

| | | | | |
|---|---|---|---|---|
| ¹Cellulon® and Kelzan® products are available from CP Kelko (Atlanta, GA). Avicel® products are available from FMC Biopolymer (Philadelphia, PA). ²F/T = freeze-thaw temperature cycling between -10 °C and 40 °C every 24 hours. ³ These samples were found to be incompatible as noted by the extensive and immediate formation of solids during preparation. | | | | |

## Claims

1. A stable composition comprising
a. a dispersed phase comprising, with respect to the total composition, from 1 gram active ingredient per liter (g ai/L) to 200 g ai/L of a water insoluble solid pesticide which is penoxsulam;
b. a continuous aqueous phase comprising, with respect to the total composition, from 100 g ai/L to 500 g ai/L of a water soluble salt of bentazon and from 200 g/L to 800 g/L of water;
c. from 0.1 g/L to 20 g/L of at least one compatible rheology agent; and
d. from 1 g/L to 100 g/L, with respect to the total composition, of at least one wetting-dispersing agent;
wherein at least one rheology agent is a mixture comprising microfibrous cellulose, a xanthan gum, and carboxymethylcellulose.

2. The composition of claim 1, wherein the average particle size of the water insoluble solid pesticide is 1-10 micrometers.

3. The composition of claim 1, wherein the dispersed phase comprises, with respect to the total composition, from 1 g ai/L to 100 g ai/L of the water insoluble solid pesticide.

4. The composition of claim 1, wherein the water soluble salt of bentazon has a solubility in deionized water at 20 °C of not less than 200 g/L.

5. The composition of claim 1, wherein the water soluble salt of bentazon is bentazon sodium.

6. The composition of claim 1, wherein the continuous aqueous phase comprises, with respect to the total composition, from 300 to 400 g ai/L of the water soluble salt of bentazon.

7. The composition of claim 1, wherein the wetting-dispersing agent is an acrylic-methacrylic copolymer grafted with polyethylene oxide side chains, an amphoteric polymeric surfactant, or a combination of a block copolymer of ethylene oxide and propylene oxide or a sodium salt of an alkylnapththalene-sulfonate condensate.

8. The composition of claim 1, wherein the composition is stable at temperatures of greater than or equal to 40 °C for a period of at least 8 weeks or stable at temperatures greater than or equal to 54 °C for a period of at least 2 weeks.

9. The composition of claim 1, wherein the composition is capable of remaining as a homogeneous suspension concentrate for at least 2 weeks at temperatures below 20 °C.

## Patentansprüche

1. Eine stabile Zusammensetzung umfassend
a. eine dispergierte Phase umfassend, bezogen auf die Gesamtzusammensetzung, von 1 Gramm Wirkstoff pro Liter (g ai/L) bis 200 g ai/L eines wasserunlöslichen festen Pestizids, welches Penoxsulam ist;
b. eine kontinuierliche wässrige Phase umfassend, bezogen auf die Gesamtzusammensetzung, von 100 g ai/L bis 500 g ai/L eines wasserlöslichen Salzes von Bentazon und von 200 g/L bis 800 g/L an Wasser;
c. von 0,1 g/L bis 20 g/L mindestens eines kompatiblen Rheologiemittels; und
d. von 1 g/L bis 100 g/L, bezogen auf die Gesamtzusammensetzung, mindestens eines benetzenden Dispergiermittels;
wobei mindestens ein Rheologiemittel eine Mischung umfassend eine mikrofaserige Cellulose, einen Xanthangummi und Carboxymethylcellulose ist.

2. Die Zusammensetzung gemäß Anspruch 1, wobei die durchschnittliche Teilchengröße des wasserunlöslichen festen Pestizids 1 bis 10 Mikrometer beträgt.

3. Die Zusammensetzung gemäß Anspruch 1, wobei die dispergierte Phase, bezogen auf die Gesamtzusammensetzung, von 1 g ai/L bis 100 g ai/L des wasserunlöslichen festen Pestizids umfasst.

4. Die Zusammensetzung gemäß Anspruch 1, wobei das wasserlösliche Salz von Bentazon eine Löslichkeit in deionisiertem Wasser bei 20 °C von nicht weniger als 200 g/L aufweist.

5. Die Zusammensetzung gemäß Anspruch 1, wobei das wasserlösliche Salz von Bentazon Natriumbentazon ist.

6. Die Zusammensetzung gemäß Anspruch 1, wobei die kontinuierliche wässrige Phase, bezogen auf die Gesamtzusammensetzung, von 300 bis 400 g ai/L des wasserlöslichen Salzes von Bentazon umfasst.

7. Die Zusammensetzung gemäß Anspruch 1, wobei das benetzende Dispergiermittel ein Acryl-Methacryl-Copolymer, gepfropft mit Polyethylenoxidseitenketten, ein amphoteres polymeres oberflächenaktives Mittel oder eine Kombination eines Blockcopolymers von Ethylenoxid und Propylenoxid oder ein Natriumsalz eines Alkylnaphtalinsulfonatkondensats ist.

8. Die Zusammensetzung gemäß Anspruch 1, wobei die Zusammensetzung bei Temperaturen von größer als oder gleich 40 °C für einen Zeitraum von mindestens 8 Wochen stabil ist oder bei Temperaturen von größer als oder gleich 54 °C für einen Zeitraum von mindestens 2 Wochen stabil ist.

9. Die Zusammensetzung gemäß Anspruch 1, wobei die Zusammensetzung in der Lage ist, als ein homogenes Suspensionskonzentrat für mindestens 2 Wochen bei Temperaturen unterhalb von 20 °C zu verbleiben.

## Revendications

1. Composition stable comprenant
a. une phase dispersée comprenant, par rapport à la composition totale, de 1 gramme de composant actif par litre (g/ca/L) à 200 g ca/L d'un pesticide solide insoluble dans l'eau qui est le pénoxsulame ;
b. une phase aqueuse continue comprenant, par rapport à la composition totale, de 100 g ca/L à 500 g ca/L d'un sel hydrosoluble de bentazone et de 200 g/L à 800 g/L d'eau;
c. de 0,1 g/L à 20 g/L d'au moins un agent de rhéologie compatible ; et
d. de 1 g/L à 100 g/L, par rapport à la composition totale, d'au moins un agent mouillant-dispersant ;
dans laquelle au moins un agent de rhéologie est un mélange comprenant de la cellulose microfibreuse, une gomme xanthane, et de la carboxyméthylcellulose.

2. Composition selon la revendication 1, dans laquelle la taille moyenne de particule du pesticide solide insoluble dans l'eau vaut de 1 à 10 micromètres.

3. Composition selon la revendication 1, dans laquelle la phase dispersée comprend, par rapport à la composition totale, de 1 g ca/L à 100 g ca/L du pesticide solide insoluble dans l'eau.

4. Composition selon la revendication 1, dans laquelle le sel hydrosoluble de bentazone a une solubilité dans l'eau désionisée à 20 °C d'au moins 200 g/L.

5. Composition selon la revendication 1, dans laquelle le sel hydrosoluble de bentazone est la bentazone-sodium.

6. Composition selon la revendication 1, dans laquelle la phase aqueuse continue comprend, par rapport à la composition totale, de 300 à 400 g ca/L du sel hydrosoluble de bentazone.

7. Composition selon la revendication 1, dans laquelle l'agent mouillant-dispersant est un copolymère acrylique-méthacrylique greffé avec des chaînes latérales de polyoxyéthylène, un tensioactif polymère amphotère, ou une association d'un copolymère séquencé d'oxyde d'éthylène et d'oxyde de propylène ou un sel de sodium d'un produit de condensation alkylnaphtalène-sufonate.

8. Composition selon la revendication 1, dans laquelle la composition est stable à des températures supérieures ou égales à 40 °C pendant une période d'au moins 8 semaines ou stable à des températures supérieures ou égales à 54 °C pendant une période d'au moins 2 semaines.

9. Composition selon la revendication 1, dans laquelle la composition est capable de rester sous forme d'un concentré de suspension homogène pendant au moins 2 semaines à des températures inférieures à 20 °C.
